# EUROPEAN PATENT APPLICATION

(11) **EP 3 103 604 A1**
(43) Date of publication of application: **14.12.2016**
(21) Application number: 16173113.8
(22) Date of filing: 06.06.2016
(51) Int. Cl.: B28B 1/00, B29C 67/00, B28B 7/46, B22F 3/00, B22F 3/105, B22F 7/06, B22F 7/08

(54) **HYBRID ADDITIVE MANUFACTURING METHODS USING GREEN STATE ADDITIVE STRUCTURES**

(30) Priority: 07.06.2015 US 201514732743
(71) Applicant: General Electric Company, Schenectady, NY 12345 (US)
(72) Inventor: SCHICK, David Edward, Greenville, SC 29615 (US); KOTTILINGAM, Srikanth Chandrudu, Greenville, TN 29615 (US); LACY, Benjamin Paul, Greenville, SC 29615 (US); WOODS, Steven Charles, Greenville, SC 29615 (US); BARNELL, Steven John, Greenville, SC 29615 (US)
(74) Representative: Pöpper, Evamaria

(57) **Abstract**

Hybrid additive manufacturing methods are disclosed, which include building a green state additive structure (20), wherein building the green state additive structure (20) comprises iteratively binding together a plurality of layers of additive material using a binder, and joining the green state additive structure (20), which may have special features (21), to a base structure (30) comprising a surface (31) to form a hybrid article (1).

## Description

### BACKGROUND OF THE INVENTION

The subject matter disclosed herein relates to additive manufacturing and, more specifically, to hybrid additive manufacturing methods and articles using green state additive structures.

Additive manufacturing processes generally involve the buildup of one or more materials to make a net or near net shape objects, in contrast to subtractive manufacturing methods. Though "additive manufacturing" is an industry standard term (ASTM F2792), additive manufacturing encompasses various manufacturing and prototyping techniques known under a variety of names, including freeform fabrication, 3D printing, rapid prototyping/tooling, etc. Additive manufacturing techniques are capable of fabricating complex components from a wide variety of materials. Generally, a freestanding object can be fabricated from a computer aided design (CAD) model. One exemplary additive manufacturing process uses an energy beam, for example, an electron beam or electromagnetic radiation such as a laser beam, to sinter or melt a powder material, creating a solid three-dimensional object in which particles of the powder material are bonded together. Different material systems, for example, engineering plastics, thermoplastic elastomers, metals, and ceramics may be used. Applications can include patterns for investment casting, metal molds for injection molding and die casting, molds and cores for sand casting, and relatively complex components themselves. Fabrication of prototype objects to facilitate communication and testing of concepts during the design cycle are other potential uses of additive manufacturing processes. Likewise, components comprising more complex designs, such as those with internal passages that are less susceptible to other manufacturing techniques including casting or forging, may be fabricated using additive manufacturing methods.

Laser sintering can refer to producing three-dimensional (3D) objects by using a laser beam to sinter or melt a fine powder. Specifically, sintering can entail fusing (agglomerating) particles of a powder at a temperature below the melting point of the powder material, whereas melting can entail fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate, and the effects of processing parameters on the microstructural evolution during the layer manufacturing process can lead to a variety of production considerations. For example, this method of fabrication may be accompanied by multiple modes of heat, mass and momentum transfer, and chemical reactions.

Laser sintering/melting techniques can specifically entail projecting a laser beam onto a controlled amount of powder material (e.g., a powder metal material) on a substrate (e.g., build plate) so as to form a layer of fused particles or molten material thereon. However, these and other additive manufacturing techniques may correspond with additional manufacturing time, costs and considerations. For example, joining additively manufactured components to other parts may be limited based on the size of the other parts, such as when they comprise large or thick sections where welding or brazing may be difficult. Furthermore, depending on the particular shape of an additively manufactured component, excess additive material from the powder bed may residually be disposed in or on the component from the build process. Such material may need to be removed before the component can undergo further processing applications.

Accordingly, alternative hybrid additive manufacturing methods and articles using green state additive structures would be welcome in the art.

### BRIEF DESCRIPTION OF THE INVENTION

In one embodiment, a hybrid additive manufacturing method is disclosed. The hybrid additive manufacturing method includes building a green state additive structure, wherein building the green state additive structure comprises iteratively binding together a plurality of layers of additive material using a binder, and joining the green state additive structure to a base structure to form a hybrid article.

In another embodiment, another hybrid additive manufacturing method is disclosed. The hybrid additive manufacturing method includes building a green state additive structure, wherein building the green state additive structure comprises iteratively binding together a plurality of layers of additive material using a binder, applying a heat to the green state additive structure to at least partially remove the binder to produce an at least partially sintered additive structure, and joining the at least partially sintered additive structure to a base structure to form a hybrid article.

In yet another embodiment, a hybrid article is disclosed. The hybrid article includes a base structure comprising a surface and a sintered additive structure joined to the surface of the base structure, wherein the sintered additive structure comprises a plurality of layers of additive material initially fused together via a binder that was subsequently removed.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a partial schematic view of a turbomachine including a turbine shroud seal structure according to one or more embodiments shown or described herein;
FIG. 2 illustrates a hybrid additive manufacturing method according to one or more embodiments shown or described herein;
FIG. 3 illustrates another hybrid additive manufacturing method according to one or more embodiments shown or described herein; and,
FIG. 4 is a perspective view of a hybrid article comprising an additive structure joined to a base structure according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

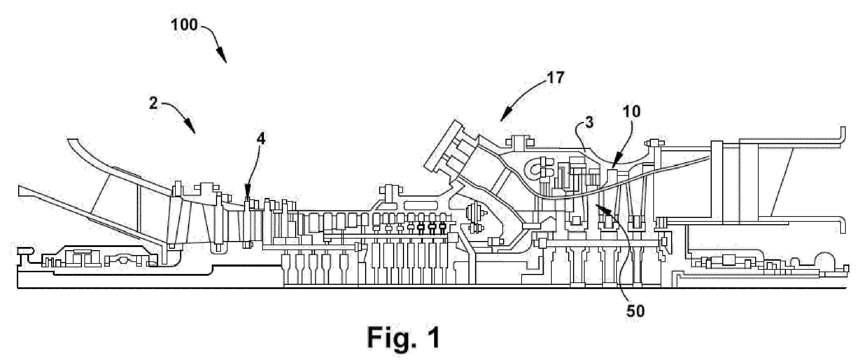

Referring now to FIG. 1, a turbomachine constructed in accordance with an exemplary embodiment is indicated generally at 2. Turbomachine 2 includes a housing 3 within which is arranged a compressor 4. Compressor 4 is linked to a turbine 10 through a common compressor/turbine shaft or rotor. Compressor 4 is also linked to turbine 10 through a plurality of circumferentially spaced combustors, one of which is indicated at 17. In the exemplary embodiment shown, turbine 10 includes first, second and third stages 50 comprising rotary members or wheels having an associated plurality of turbine blade members or buckets. Wheels and buckets in conjunction with corresponding stator vanes can further define the various stages 50 of turbine 10. With this arrangement, buckets rotate in close proximity to an inner surface of the housing 3.

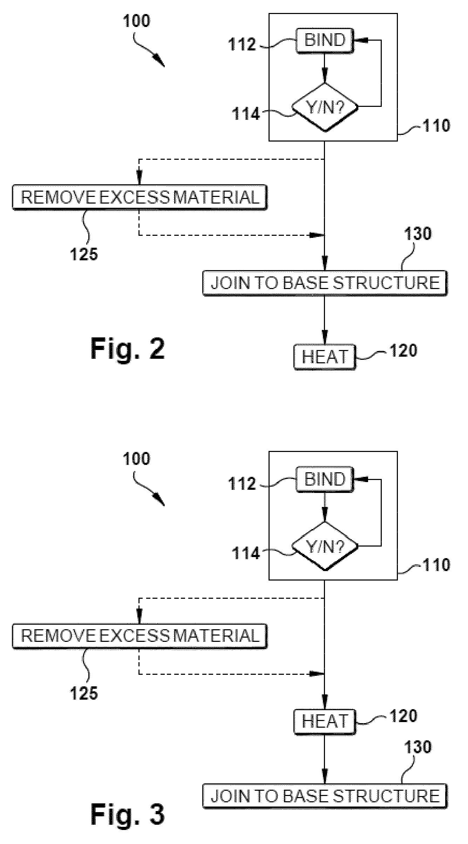

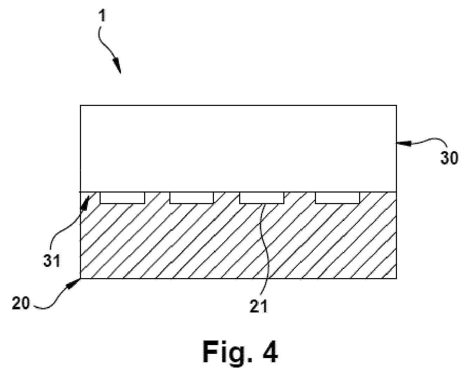

Referring now additionally to FIGS. 2-3, hybrid additive manufacturing methods 100 and 110 are illustrated. The hybrid additive manufacturing methods 100 and 110 can be utilized to manufacture a hybrid article 1 (exemplary illustrated in FIG. 4) that can be incorporated into one or more of the various components of the turbomachine 2.

With specific reference to FIGS. 2-4, the hybrid additive manufacturing method 100 can generally comprise building one or more green state additive structures 20 in step 110 and joining the one or more green state additive structures 20 to a base structure 30 in step 130 to form a hybrid article 1. In some embodiments, an additional heat application may be applied in step 120 to further remove the binder from the green state additive structure 20 for sintering. For example, this additional heat application in step 120 may occur after the green state additive structure 20 is joined to the base structure 30 in step 130 (if needed) as illustrated in the hybrid additive manufacturing method 100. Alternatively or additionally, this additional heat application in step 120 may occur prior to joining the green state additive structure 20 to the base structure 30 in step 130 as illustrated in the hybrid additive manufacturing method 110. Exemplary hybrid additive manufacturing methods 100 and 110 and resulting hybrid articles 1 will now be discussed in more detail.

As illustrated in FIGS. 2 and 4, the hybrid additive manufacturing method 100 first comprises the general step of building one or more green state additive structures 20 in step 110. Building each of the one or more green state additive structures 20 in step 110 comprises iteratively binding together a plurality of layers of additive material using a binder. As used herein, "iteratively binding together a plurality of layers of additive material using a binder" and "additive manufacturing" refers to any process which results in a three-dimensional object and includes a step of sequentially forming the shape of the object one layer at a time. For example, as illustrated in FIG. 2, iteratively binding together a plurality of layers of additive material in step 110 can comprise the individual steps of binding together an individual layer of additive material in step 112 and determining whether another layer is required in step 114. If the green state additive structure 20 requires another layer, than the building process repeats step 112. If the green state additive structure 20 does not require another layer, than the hybrid additive manufacturing method 100 can advance to the next step.

Additive manufacturing processes can include powder bed additive manufacturing processes wherein the powder bed may comprise a bed of additive material such as one or more powder alloy materials. The additive manufacturing process may bind each of the plurality of layers of the additive material by depositing a binder onto the additive material for each iterative layer. The binder may comprise any material that temporarily binds together at least a portion of the additive material (e.g., powder alloy) and can be applied to the powder bed through any suitable technique (e.g., printing) as appreciated by those skilled in the art.

The additive material bound together by the binder can comprise a variety of different potential materials that can depend on, for example, the type of additive manufacturing method and/or the specific application for the hybrid article 1. For example, the additive material can comprise any powder metal. Such powder metals can include, by non-limiting example, cobalt-chrome alloys, aluminum and its alloys, titanium and its alloys, nickel and its alloys, stainless steels, tantalum, niobium or combinations thereof. In other embodiments, the additive material may comprise a powder ceramic or a powder plastic.

As a result of iteratively binding together a plurality of layers in step 112 until reaching completion in step 114, a green state additive structure 20 can be built in step 110 of the hybrid additive manufacturing method 100. As used herein, "green state" can refer to the additive structure that still comprises the binder before it is burnt off in one or more subsequent heat applications (e.g., sintering cycles).

The green state additive structure 20 can thereby comprise a variety of shapes and configurations. For example, in some embodiments, the green state additive structure 20 can comprise a plurality of features 21 such as tubes, pins, plates, or the like. Such embodiments may provide various complex geometries for one or more parts of the turbomachine 2 such as combustion components or hot gas path components. In some particular embodiments, the features 21 may comprise one or more tubes for directing fuel or other combustible material. In some embodiments, features 21 may facilitate cooling features or other fluid flow passages. While specific embodiments of green state additive structures 20 have been discussed and illustrated herein, it should be appreciated that these are only intended to be non-limiting examples and additional or alternative embodiments may also be realized.

In some embodiments, the hybrid additive manufacturing method 100 may optionally comprise at least partially removing excess additive material from the green state additive structure 20 in step 125 before joining the green state additive structure 20 to the base structure 30 in step 130. At least partially removing excess additive material can comprise removing any of the material from the powder bed that is not bound via the binder to the green state additive structure 20 but may be caught or left behind in the green state additive structure 20. For example, potentially non-bound additive material may be disposed on the surface or in one or more voids or cavities of the green state additive structure 20. In such embodiments, at least partially removing excess additive material from the green state additive structure 20 in step 125 can comprise any suitable technique for separating powder from the additive structure 20 such as flipping, rotating, shaking or vacuuming the green state additive structure 20. In some embodiments, excess additive material may be blown off of or away from the green state additive structure 20 such as by using compressed air or water.

Still referring to FIGS. 2 and 4, the hybrid additive manufacturing method 100 can further comprise joining the one or more green state additive structures 20 to a base structure 30 in step 130.

The base structure 30 can comprise any type or portion of a component that has a surface 31 for which the additive structure 20 can be joined thereto. For example, in some embodiments, the base structure 30 may comprise a plate or base such as illustrated in FIG. 4. Such base structures 30 can comprise any relatively simple configurations that may be more susceptible to alternative and cheaper manufacturing methods compared to additive manufacturing methods. For example, in some embodiments, the base structure 30 may comprise a non-additively manufactured component such as a cast component, a machined component, or a forged component. In some embodiments, the base structure 30 may comprise an additively manufactured component (e.g., a component manufactured using a powder bed or powder fed additive process). In even some embodiments, the base structure 30 may comprise a green state additively manufactured component like the green state additive structure 20.

The base structure 30 can also comprise any metal or alloy substrate suitable for a joining application (e.g., braze or weld) with the additive structure 20. In some embodiments, the base structure may comprise a different material than the additive structure 20. For example, the additive structure 20 may comprise a lower melting temperature than the base structure 30, a lower oxidation resistance than the base structure 30 and/or a lower strength than the base structure 30. However, in some embodiments, the additive structure 20 may actually have one or more higher properties than the base structure 30 such as, but not limited to, melting temperature, oxidation resistance and/or strength.

In some embodiments, the base structure 30 may comprise a nickel, cobalt, or iron based superalloys. For example, the base structure 30 may comprise nickel-based superalloys such as René N4, René N5, René 108, GTD-111®, GTD-222®, GTD-444®, IN-738 and MarM 247 or cobalt-based superalloys such as FSX-414. The base structure 30 may be formed as an equiaxed, directionally solidified (DS), or single crystal (SX) casting to withstand relatively higher temperatures and stresses such as may be present within a gas or steam turbine.

Joining each of the one or more green state additive structures 20 to the base structure 30 in step 130 can occur through any suitable technique such as brazing or welding. For example, heat applied in step 130 to join the green state additive structure 20 to the surface 31 of the base structure 30 can comprise any suitable temperature, heat source, iterations, ramp rate, hold time, cycle and any other relevant parameters to join (e.g., braze, bond or the like) the materials together to form the overall hybrid article 1. In some embodiments, step 130 of the hybrid additive manufacturing method 100 may comprise joining a single green state additive structure 20 to the base structure 30. In some embodiments, step 130 of the hybrid additive manufacturing method 100 may comprise joining a plurality of green state additive structure 20 to the base structure 30. In such embodiments, the plurality of green state additive structures 20 may be joined to the base structure 30 at the same time, at different times, or combinations thereof.

In some embodiments, joining each green state additive structure 20 to the base structure 30 comprises applying a heat that is also sufficient to remove the binder from the green state additive structure 20 to produce a sintered additive structure 20. For example, the heat required to sufficiently join the green state additive structure 20 to the base structure 30 may be sufficiently high enough to also burn off any binder contained in the green state additive structure 20.

However, in some embodiments, an additional heat application in step 120 (that is separate from the joining process in step 130) may be incorporated to at least partially remove the binder from the green state additive structure 20. For example, in some embodiments, such as that illustrated in FIG. 2, additional heat may optionally be applied in step 120 of the hybrid additive manufacturing method 100 after the green state additive structure 20 is joined to the based structure 30 in step 130. For example, the heat applied in the joining step 130 may only partially remove the binder from the additive structure 20 such that an additional heat application is needed in step 120 to form a fully sintered structure.

In even some embodiments, such as that illustrated in FIG. 3, additional heat may be applied in step 120 of the hybrid additive manufacturing method 110 before the additive structure 20 is joined to the base structure 30 in step 130. In such embodiments, the heat applied in step 120 may at least partially remove the binder from the green state additive structure 20 to form an at least partially sintered additive structure 20 prior to being joined with the base structure 30 in step 130. The joining application in step 130 or even another subsequent heat application may thereby complete the removal of binder from the at least partially sintered additive structure 20. While specific embodiments have been presented herein regarding different potential steps and their respective order, it should be appreciated that such embodiments are exemplary only and additional or alternative variations may also be realized.

Referring now additionally to FIG. 4, as a result of joining the one or more additive structures 20 to the base structure 30 in the hybrid additive manufacturing method 100 or 110, a hybrid article 1 can be produced. The hybrid article 1 can facilitate the manufacturing of the potentially more complex portions via the additive structure 20 while further allowing for more time or cost effective manufacturing methods for potentially less complex portions via the base structure 30. Iteratively binding together a plurality of layers of additive material using a binder to build the additive structure 20 may also facilitate a more streamlined overall manufacturing process when some or all of the binder in the green state additive structure 20 can be burned off (e.g., sintered) during the subsequent joining process with the base structure 30. Moreover, the additive structure 20 and the base structure 30 may comprise similar or different materials to tailor each portion based on manufacturing and intended application considerations.

The hybrid article 1 may further comprise a variety of types of components such as one or more of the turbine components discussed herein. For example, the hybrid article 1 may comprise a turbine component that possesses both relatively complex and relatively basic features. In some embodiments, the hybrid article 1 may comprise a fuel dispenser and/or mixer, nozzle, swirler, airfoil, nozzle endwall, shroud, turbine blade (or other type of rotating airfoil), turbine blade platform, or any other type of turbine component including combustion and hot gas path components. While specific components and features have been disclosed herein, it should be appreciated that these embodiments are intended to be non-limiting examples, and additional or alternative configurations may also be realized.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

For completeness, various aspects of the invention are now set out in the following numbered clauses:
1. A hybrid additive manufacturing method comprising:
   building a green state additive structure, wherein building the green state additive structure comprises iteratively binding together a plurality of layers of additive material using a binder; and,
   joining the green state additive structure to a base structure to form a hybrid article.
2. The hybrid additive manufacturing method of claim 1, wherein joining the green state additive structure to the base structure comprises applying a heat also sufficient to remove the binder from the green state additive structure to produce a sintered additive structure.
3. The hybrid additive manufacturing method of claim 1, further comprising an additional heat application after joining the green state additive structure to the base structure, wherein the additional heat application removes the binder from the green state additive structure to produce a sintered additive structure.
4. The hybrid additive manufacturing method of claim 1, further comprising at least partially removing excess additive material from the green state additive structure before joining the green state additive structure to the base structure.
5. The hybrid additive manufacturing method of claim 1, wherein the green state additive structure comprises a different material than the base structure.
6. The hybrid additive manufacturing method of claim 5, wherein the green state additive structure comprises a lower melting temperature than the base structure.
7. The hybrid additive manufacturing method of claim 1, wherein the base structure comprises a nickel, cobalt or iron based superalloy.
8. The hybrid additive manufacturing method of claim 1, wherein the base structure comprises a non-additively manufactured component.
9. The hybrid additive manufacturing method of claim 1, wherein the base structure comprises an additively manufactured component.
10. A hybrid additive manufacturing method comprising:
   building a green state additive structure, wherein building the green state additive structure comprises iteratively binding together a plurality of layers of additive material using a binder;
   applying a heat to the green state additive structure to at least partially remove the binder to produce an at least partially sintered additive structure; and,
   joining the at least partially sintered additive structure to a base structure to form a hybrid article.
11. The hybrid additive manufacturing method of claim 10, wherein the base structure comprises a non-additively manufactured component.
12. The hybrid additive manufacturing method of claim 10, wherein the base structure comprises a machined component.
13. The hybrid additive manufacturing method of claim 10, wherein the at least partially sintered additive structure comprises a different material than the base structure.
14. The hybrid additive manufacturing method of claim 13, wherein the at least partially sintered additive structure comprises a lower melting temperature than the base structure.
15. The hybrid additive manufacturing method of claim 10, wherein the base structure comprises a nickel, cobalt or iron based superalloy.
16. A hybrid article comprising:
   a base structure comprising a surface; and,
   a sintered additive structure joined to the surface of the base structure, wherein the sintered additive structure comprises a plurality of layers of additive material initially fused together via a binder that was subsequently removed.
17. The hybrid article of claim 16, wherein the sintered additive structure comprises a different material than the base structure.
18. The hybrid article of claim 17, wherein the sintered additive structure comprises a lower melting temperature than the base structure.
19. The hybrid article of claim 17, wherein the sintered additive structure comprises a lower oxidation resistance than the base structure.
20. The hybrid article of claim 16, wherein the base structure comprises a nickel, cobalt or iron based superalloy.

## Claims

1. A hybrid additive manufacturing method comprising:
building a green state additive structure (20), wherein building the green state additive structure (20) comprises iteratively binding together a plurality of layers of additive material using a binder; and,
joining the green state additive structure (20) to a base structure (30) to form a hybrid article (1).

2. The hybrid additive manufacturing method of claim 1, wherein joining the green state additive structure (20) to the base structure (30) comprises applying a heat also sufficient to remove the binder from the green state additive structure (20) to produce a sintered additive structure (20).

3. The hybrid additive manufacturing method of claim 1, further comprising an additional heat application after joining the green state additive structure (20) to the base structure (30), wherein the additional heat application removes the binder from the green state additive structure (20) to produce a sintered additive structure (20).

4. The hybrid additive manufacturing method of claim 1, further comprising at least partially removing excess additive material from the green state additive structure (20) before joining the green state additive structure (20) to the base structure (30).

5. The hybrid additive manufacturing method of claim 1, wherein the green state additive structure (20) comprises a different material, preferably with a lower melting temperature, than the base structure (30).

6. The hybrid additive manufacturing method of claim 1, wherein the base structure (30) comprises a nickel, cobalt or iron based superalloy.

7. The hybrid additive manufacturing method of claim 1, wherein the base structure (30) comprises a non-additively or an additively manufactured component.

8. A hybrid additive manufacturing method comprising:
building a green state additive structure (20), wherein building the green state additive structure (20) comprises iteratively binding together a plurality of layers of additive material using a binder;
applying a heat to the green state additive structure (20) to at least partially remove the binder to produce an at least partially sintered additive structure (20); and,
joining the at least partially sintered additive structure (20) to a base structure (30) to form a hybrid article (1).

9. The hybrid additive manufacturing method of claim 8, wherein the base structure (30) comprises a non-additively manufactured or a machined component.

10. The hybrid additive manufacturing method of claim 8, wherein the at least partially sintered additive structure (20) comprises a different material, preferably with a lower melting temperature, than the base structure (30).

11. The hybrid additive manufacturing method of claim 8, wherein the base structure comprises a nickel, cobalt or iron based superalloy.

12. A hybrid article (1) comprising:
a base structure (30) comprising a surface (31); and,
a sintered additive structure (20) joined to the surface (31) of the base structure (30), wherein the sintered additive structure (20) comprises a plurality of layers of additive material initially fused together via a binder that was subsequently removed.

13. The hybrid article (1) of claim 12, wherein the sintered additive structure (20) comprises a different material than the base structure (30).

14. The hybrid article (1) of claim 13, wherein the sintered additive structure (20) comprises a lower melting temperature or a lower oxidation resistance than the base structure (30).

15. The hybrid article (1) of claim 12, wherein the base structure (30) comprises a nickel, cobalt or iron based superalloy.
